(19) **Europäisches Patentamt**

**European Patent Office**

**Office européen des brevets**

(11) **EP 1 211 477 B1**

(12) **EUROPEAN PATENT SPECIFICATION**

(45) Date of publication and mention
of the grant of the patent:
**17.05.2006 Bulletin 2006/20**

(51) Int Cl.:
*G01B 7/312* [(2006.01)]    *G01M 17/02* [(2006.01)]

(21) Application number: **01127935.3**

(22) Date of filing: **23.11.2001**

(54) **Measurement of the unbalancing of a ferromagnetic metal core in a nonconductive and nonferroelectric ribbon**

**Messung der Unwucht eines ferromagnetischen Metallkerns in einem nichtleitenden und nichtferroelektrischen Band**

**Mesure du balourd d'une âme ferromagnétique et métallique dans un ruban nonconductant et nonferroélectrique**

(84) Designated Contracting States:
**DE FR GB IT**

(30) Priority: **23.11.2000 IT MI002522**

(43) Date of publication of application:
**05.06.2002 Bulletin 2002/23**

(73) Proprietor: **ELECTRONIC SYSTEMS S.P.A.**
**28015 Momo (NO) (IT)**

(72) Inventors:
• **Saini, Marco**
**28041 Arona (NO) (IT)**
• **Nisoli, Maurizio**
**21052 Busto Arsizio (VA) (IT)**
• **Viero, Davide**
**21015 Lonate Pozzolo (VA) (IT)**
• **Traficante, Francesco**
**21052 Busto Arsizio (VA) (IT)**

(74) Representative: **Premru, Rok**
**Via De Amicis 4**
**20052 Monza (MI) (IT)**

(56) References cited:
EP-A- 0 428 903          US-A- 4 641 525
US-A- 5 214 376

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The subject of the present invention is a device and a method for measuring the unbalancing of a ferromagnetic metal core inserted inside a ribbon made of electrically non-conductive and non-ferromagnetic material.

Likewise forming a subject of the present invention is a method for calibrating said device.

In the production of tyres, ribbons of rubber are used reinforced with a metal core made up of strands of steel cord, set parallel to one another, at a predetermined pitch, in the direction of production of the ribbon material.

Generally, these ribbons have a mean thickness of between 1 and 3 mm, and the strands, embedded within the ribbon, have a mean diameter of between 0.5 and 1.5 mm; the pitch between the strands may range from 1 to 3 mm.

During production, the metal core must remain centred within the ribbon. When the unbalancing is higher than the allowed tolerances, action is taken on the production plant so as to bring the metal core into conditions of balancing.

The European patent application EP 0 428 903 discloses the measurement of the unbalancing of a metal strand embedded within a rubber. The measurement set-up provides both a noncontact laser distance meter and a magnetic proximity sensor arranged at each side of the rubber.

Moreover, it is referred to the Italian patent application MI 99 A 111735 and the corresponding family documents DE 100 37 944 and FR 2 797 322, all of them being published after the priority date of the present application.

The Italian patent application MI 99 A 001735, in the name of the present applicant, discloses a device for measuring the unbalancing of steel strands inside a ribbon made of rubber; this device likewise enables measurement of the thickness of the rubber ribbon.

The device described in the patent application MI 99 A 001735 basically envisages:

- a first measuring head, consisting of a first pneumatic distance meter and a first inductive distance meter integral with one another, which define one side of a space designed to enable passage of a ribbon material, and
- a second measuring head, consisting of a second pneumatic distance meter and a second inductive distance meter integral with one another, which define the opposite side of a space designed to enable passage of a ribbon material.

The difference of the output signals of the inductive meters is proportional to the difference between the distances of the two heads from the strand of steel cord.

A feedback system is provided for maintaining the inductive meters equidistant from the strands. Since the inductive sensors are equidistant from the strands, the difference between the distances measured by the pneumatic sensors thus yields the measurement of the "unbalancing" of the ferromagnetic metal core, namely, the deviation between the median plane of the ribbon and the actual position of the ferromagnetic metal core.

The difference between the distance between the pneumatic meters and the sum of the distances measured by the pneumatic meters yields, instead, the thickness of the ribbon being measured.

The system described in the patent application MI 99 A 001735 presents, however, certain disadvantages.

To obtain the measurement of the position of the ferromagnetic metal layer, at least one of the two heads must continuously track the strand, so that the two heads remain equidistant from the strand, in order to cancel out the difference between the output signals of the two meters.

The ribbon to be measured may oscillate, thus forcing both of the measuring heads to track these oscillations so as to bring them back within the range of measurement of the heads (consider, in fact, that the working range of a pneumatic sensor is approximately not more than 0.5 mm).

The continuous movement of at least one of the measuring heads entails the use of appropriate mechanics, which is necessarily delicate and by no means inexpensive, and requires frequent maintenance.

The aim of the present invention is to propose a device and a process for overcoming the problems outlined above.

The above aim is achieved by means of a device for measuring the unbalancing in accordance with the contents of Claim 1, by means of a process of calibrating in accordance with the contents of Claim 4, and by means of a method of measuring of the unbalancing in accordance with the contents of Claim 7.

Particular embodiments of the invention can be obtained in accordance with the contents of the dependent claims.

A possible embodiment of the invention, in accordance with the contents of the patent claims, will now be described, purely by way of example, with reference to the annexed figures, in which:

- Figure 1 is a schematic view of the device for measuring the relative position of a reinforcement made of ferromagnetic metal embedded in a ribbon of rubber;
- Figure 2 shows the calibration curves of the inductive sensors and, in particular, the pairs of voltages for which the inductive sensors are at the same distances from the target;
- Figure 3 shows how the local sensitivity of the inductive sensors is measured in an exact way;

- Figure 4 shows how the local sensitivity of the inductive sensors is obtained in an approximate way; and
- Figure 5 shows the distances measured by the measuring device, which are then used to obtain both unbalancing of the ferromagnetic metal core and the thickness of the ribbon.

According to the embodiment illustrated, the device for measuring the unbalancing of a ferromagnetic metal core inserted within the ribbon itself comprises a first distance meter 2, for example of a pneumatic type, designed to measure the distance of the face of the ribbon facing the first meter 2, and a first inductive distance meter 3, designed to measure the distance of the ferromagnetic metal core inserted in the ribbon itself.

The first meters 2, 3 are integral with one another and are set on one side of a first space 10 for receiving the ribbon, and operate in two coaxial spatial regions, whereby their measurements refer to one and the same first measuring axis 8.

Set opposite to the first meters 2, 3 is a first reference surface 4, made of an electrically non-conductive and non-ferromagnetic material (i.e., a material having relative magnetic permeability $\mu_r \cong 1$), which is designed to enable the contact with the face of the ribbon facing the surface 4 itself.

The distance of the first meters 2, 3 with respect to the first reference surface 4 is adjustable along the first measuring axis 8.

Also provided are means 12 for detecting the relative position of the first meters 2, 3 along the first measuring axis 8 with respect to a first reference $Z_1$.

The device also envisages a second distance meter 5, for example of a pneumatic type, designed to measure the distance of the face of the ribbon facing the second meter 5, and a second inductive distance meter 6, designed to measure the distance of the metal core inserted in the ribbon.

The second meters 5, 6 are integral with one another and are set on one side of a second space 11 for receiving the ribbon, and operate in two coaxial spatial regions, whereby their measurements refer to one and the same second measuring axis 9.

A second reference surface 7 is provided, constituted by an electrically non-conductive and non-ferromagnetic material (i.e., a material having relative magnetic permeability $\mu_r \cong 1$), which is set on the opposite side of said second space 11 and is designed to enable contact with the face of the ribbon facing the second reference surface 7 itself.

The distance of the second meters 5, 6 with respect to said second reference surface 7 is adjustable along said second measuring axis 9.

Moreover provided are means 13 designed to detect the relative position of the second meters 5, 6 along the second measuring axis 9 with respect to a second reference point $Z_2$.

The first space 10 and second space 11 are in communication with one another so as to enable passage of a ribbon from the first space 10 to the second space 11.

The first meters 2, 3 and the second reference surface 7 define one side of the communicating spaces 10, 11 for passage of the ribbon, and the first reference surface 4 and the second meters 5, 6 define the opposite side of the communicating spaces 10, 11 for passage of the ribbon.

The first meters 2, 3 move with alternating linear motion orthogonal to the direction of movement of the ribbon.

Also the second meters 5, 6 move with alternating linear motion orthogonal to the direction of movement of the ribbon, and their movement is synchronized with that of the first meters 2, 3 so that the path of the second measuring axis 9 on the ribbon coincides with the path of the first measuring axis 8 on the ribbon, i.e., so as to enable measurement of the ribbon material in the same points.

If a reference surface 4, 7 made of an electrically non-conductive material is used, the formation of induced parasitic currents that would reduce the overall magnetic flux $\Phi$ and would vitiate the measurement of the distance of the metal core is avoided.

If a non-ferromagnetic material is used, the increase in the overall reluctance of the magnetic circuit affected by the magnetic field generated by the inductive meter that would increase the overall magnetic flux $\Phi$ and would vitiate the measurement of the distance of the metal core is prevented.

The measurements of the inductive sensors thus depend only upon the distance and density of the metal core inserted in the ribbon to be measured.

Preferably, the reference surfaces 4 , 7 are constituted by idler rollers, so as to minimize the phenomena of friction with the ribbon.

A possible embodiment envisages that the rollers comprise an internal layer made of aluminium, which bestows on the roller the necessary mechanical strength, an intermediate layer made of glass fibre, and an external layer made of polytetrafluoroethylene (PTFE).

Another possible embodiment envisages that the roller has an internal layer made of metal, and an external layer made of ceramic materials, such as $Al_2O_3$ or SiC.

The pneumatic distance meters 2, 5 can be replaced with other meters suitable for the purpose, for example optical diffusion meters, or else ultrasound meters.

There follows the description of the process for calibrating the inductive meters 3, 6 and the pneumatic meters 2, 5 of the device herein illustrated.

The first calibration step takes place in the laboratory and envisages detection of a single work point of each inductive sensor 3, 6.

For this purpose, a ferrite specimen is used having a parallelepipedal shape (indicative dimensions: 50 x 50 x 10 mm), which is kept at a pre-set distance from the inductive sensor 3, 6 by means of a spacer made of electrically non-conductive and non-ferromagnetic material.

In a possible embodiment, the spacer has a thickness of approximately 7 mm.

This operation enables recording of a pair of output voltages $(V_{1,0}, V_{2,0})$ to which the same distance $d_{F0}$ (for example, 7 mm) of the ferrite specimen from the two inductive sensors 3 and 6 corresponds.

Ferrite is chosen as the material for making the specimen because its behaviour in the presence of magnetic fields is very similar to that of strands of steel cord.

In fact, the relative permeability $\mu_r$ of steel strands and ferrite is similar (typically, between 500 and 1000), and in both materials the parasitic currents induced by the inductive meter are negligible.

It is believed that the generation of parasitic currents in metal strands is negligible because the strands consist of very thin wires (typically, with diameters of between 0.5 and 1.5 mm). In addition, when the product is made, rubber is inserted between the individual wires that form the strands of steel cord, thus increasing the electrical resistance between the contiguous metal wires.

Consequently, when a rubber ribbon with strands of steel cord inserted inside it is measured, it is possible to assume that, regardless of the absolute value of the distance of the strands from the inductive sensors 3 and 6, when the output voltages of the inductive meters correspond to the voltages recorded in the laboratory $(V_{1,0}, V_{2,0})$, the strands of steel cords are found to be at the same distance do from the inductive sensors 3 and 6.

It should be noted that, whilst the distance $d_{F0}$ from the ferrite specimen is known, the distance do from the cord is unknown because it varies according to the pitch and diameter of the cord itself; however, as clarified in what follows, this does not represent a problem.

The second calibration step is performed on board the machine upon commissioning. This envisages the creation of a calibration curve for each inductive meter 3, 6 and for each pneumatic meter 2, 5.

For this purpose, on board the machine there is a ferrite specimen identical to the specimen used in the laboratory.

The first sensors 2, 3 are brought up to the ferrite specimen, along the first measuring axis 8, until they reach the minimum distance for measurement by the pneumatic sensor (approximately 0.5 mm).

Starting from this position, the first sensors 2, 3 are then moved away from the ferrite specimen with steps of 0.5 mm, or less, up to a distance of approximately 10 mm, whilst appropriate position transducers 12 enable measurement of the distance of the sensors 2, 3 with respect to the first reference $Z_1$.

Since the precision of the sensors 2, 3 depends upon the precision of the position transducer, it is necessary to choose a transducer 12 that is adequately sensitive and precise.

Preferably, an absolute position transducer is used, such as a linear variable differential transformer (LVDT).

The distances of the first sensors 2, 3 with respect to the first reference $Z_1$ are converted into distances with respect to the ferrite specimen, knowing that the voltage $V_{1,0}$ of the inductive sensor previously recorded in the laboratory corresponds to the known distance $d_{F0}$.

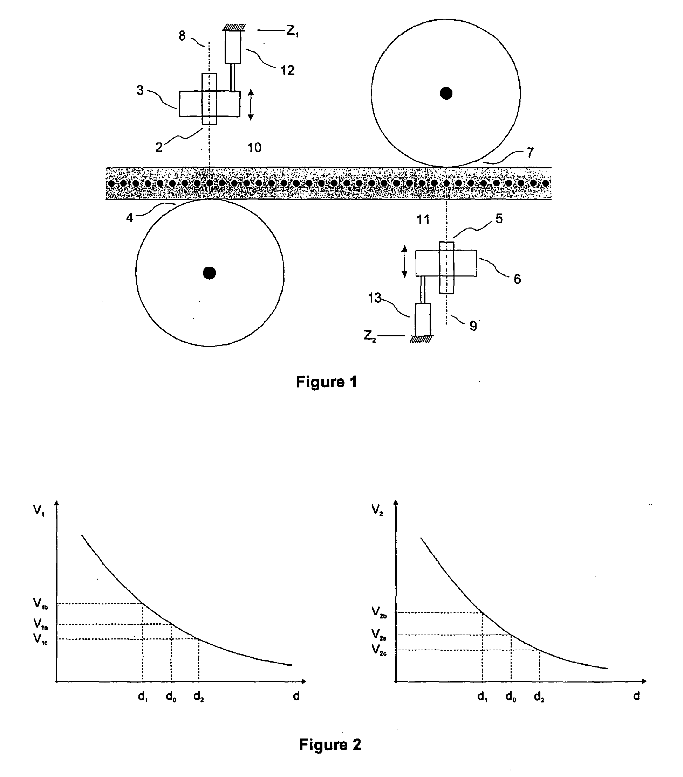

The pairs of values (distance, inductive-sensor voltage) and (distance, pneumatic-sensor voltage) which are recorded during recession enable the calibration curves of the first sensors 2, 3 to be constructed by interpolation (as regards the calibration curve of the inductive sensor 3, see Figure 2).

The same calibration procedure is then repeated for the second sensors 5, 6 on the same ferrite specimen, or else on ferrite specimens of similar dimensions.

Given that the distance of the strands measured by the inductive sensors 3, 6 is not the actual distance, from the calibration curves of the inductive sensors 3 and 6 it is, however, possible to obtain, for each apparent distance $d_i$, the pair of voltages $(V_{1,1}, V_{2,1})$ for which the inductive meters 3, 6 are at the same distance from the strands of steel cord.

Conversely, from each pair of voltages $(V_{1,i}, V_{2,i})$, it is possible to find the distance of the inductive meters from the ferrite target.

The third calibration step is carried out upon commissioning of the machine and involves mapping of the cylinders 4 and 7 by means of the pneumatic sensors 2 and 5.

This operation enables the device in question to be used also for measuring the thickness of the ribbon, eliminating errors of measurement of the thickness due to the irregularities present on the surfaces of the rollers 4 and 7.

Mapping consists in dividing, ideally, the cylindrical surface of the roller into a plurality of square or rectangular areas, and in measuring, for each individual area, in the absence of material, the mean height, so as to construct the two-dimensional profile of the reference surface, referred to as zero profile.

The two profiles for the two rollers 4 and 7 are stored in memory and retrieved for calculating the thickness.

The fourth and final calibration step consists in measuring the local sensitivity $S_1$, $S_2$ of the inductive meters 3, 6 in the neighbourhood of the work point.

The sensitivity of the inductive meters is defined as the ratio of the variation in distance from the cord / signal variation, and is typically expressed in $\mu$m/mV.

If a high precision of the unbalancing value is required, the fourth step is performed directly on the ribbon during production and must be repeated whenever the characteristics of the metal core change (typically, with each change in production).

The nominal work point of the first inductive meter 3 is found by bringing the first meters 2, 3 to the ideal distance for measurement by the pneumatic sensor 2 (typically, 0.7 mm from the surface of the material) and recording the output voltage of the inductive meter 3.

From this position, a ranging of approximately $\pm$ 0.2 mm is performed (with steps of 0.1 mm or even less), taking readings of the voltage values supplied by the inductive sensor 3.

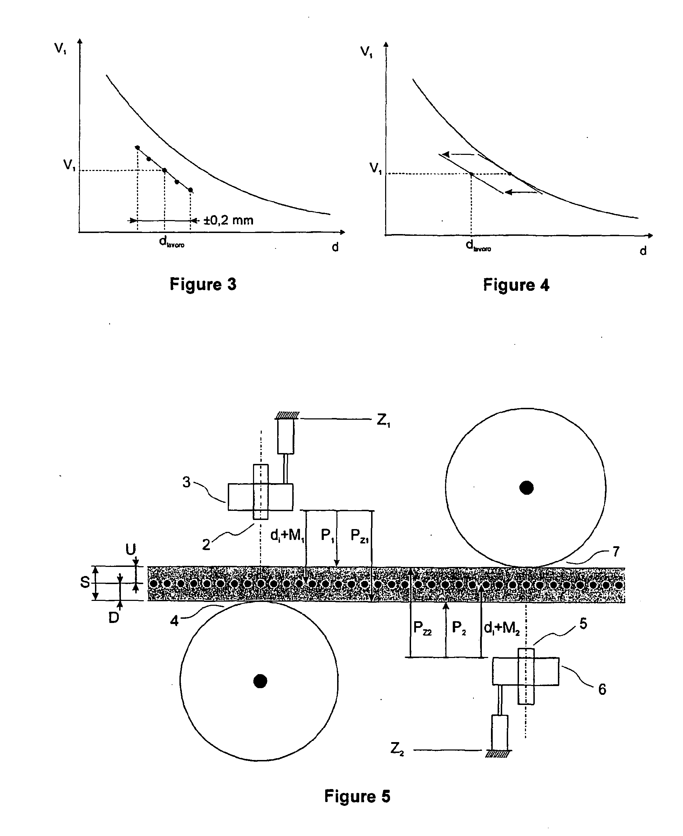

From the series of distance-voltage pairs thus obtained it is possible to find (for example, by linear regression) the sensitivity of the inductive meter 3 in the neighbourhood of the corresponding work point (see Figure 3).

A similar sequence of positioning, displacement and calculation of sensitivity is performed for the meters 5, 6.

Alternatively, the local sensitivity $S_1$, $S_2$ of each inductive meter can be, more simply, defined as the tangent to the calibration curve of the inductive sensor in the neighbourhood of the voltage corresponding to the work point (see Figure 4).

When the latter solution is adopted, the percentage error in the measurement of unbalancing, albeit variable according to the type of metal cord present, remains, in any case, lower than 20%.

Operation of the device is described in what follows.

The rubber ribbon with strands of steel cord is made to enter through the spaces 10 and 11.

Both the first meters 2, 3 and the second meters 5, 6 are brought to the ideal distance for measurement by the respective pneumatic sensor (typically, 0.7 mm from the surface of the material).

Thanks to this positioning, if the cord is balanced, it is found to be at the same distance from the two inductive meters; consequently, the latter yield a pair of voltages **($V_1$, $V_2$)** which coincide with one of the pairs of voltages **($V_{1,i}$, $V_{2,i}$)** derived from the calibration curves.

If, instead, at that moment the cord is not balanced, the pair of voltages **($V_{1,i}$, $V_{2,i}$)** that is closest to the pair of voltages **($V_1$, $V_2$)** which the two inductive meters yield is selected.

From the local sensitivity values, the deviations **$M_1$** and **$M_2$** respectively of the first inductive meter 3 and of the second inductive meter 6 with respect to the distance $d_i$ are derived as follows:

$$M_1 = S_1 \cdot (V_1 - V_{1i}) \ , \quad M_2 = S_2 \cdot (V_2 - V_{2i})$$

where

$S_1$ is the local sensitivity of the first inductive meter 3; and

$S_2$ is the local sensitivity of the second inductive meter 6.

With reference to Figure 5, denoting by **U** and **D** respectively the thicknesses of the top and bottom layers of rubber, we find

$$U = d_i + M_1 - P_1 \ , \quad D = d_i + M_2 - P_2$$

where

$P_1$ is the distance of the first surface of the ribbon from the first pneumatic meter 2; and

$P_2$ is the distance of the second surface of the ribbon from the second pneumatic meter 5.

The unbalancing of the ferromagnetic metal core is thus given by the difference

$$U - D = M_1 - M_2 + P_2 - P_1$$

The difference **$P_2$ - $P_1$,** which ideally ought to be zero thanks to the positioning of the sensors, in actual fact enables correction of minor errors due to thermal expansion, irregularities of the rollers 4, 7, and imprecisions in the positioning itself.

Although the device in question is designed for measuring the unbalancing of strands of steel cord, it also enables measurement of the thickness of the rubber ribbon.

With reference to Figure 5, the thickness S of the ribbon material is

$$S = P_{z1} - P_1 \quad \text{or else} \quad S = P_{z2} - P_2$$

where

$P_{z1}$ is the value of the zero profile of the first pneumatic meter 2 for the area of the roller on which the meters 2, 3 are located; and

$P_{z2}$ is the value of the zero profile of the second pneumatic meter 5 for the area of the roller on which the meters 5, 6 are located.

The first advantage of the device and of the method described is that the initial calibration of the two inductive meters on the ferrite specimen makes it possible to obtain, for any kind of metal cord, irrespective of the pitch and diameter of the strands, accurate balancing information and an approximate indication of unbalancing.

This proves particularly useful in the starting-up stage of the plant, when it is necessary to achieve rapidly an acceptable condition for production.

The calibration on a ferrite specimen is thus universal for any type of cord.

The result is obtained without any type of position tracking, with a clear increase in reliability and duration of the mechanical parts.

## Claims

1. A device for measuring the unbalancing of a ferromagnetic metal core set inside a ribbon of electrically non-conductive and non-ferromagnetic material the device comprising:

   - a first distance meter (2), designed to measure the distance of a face of a ribbon, and a first inductive distance meter (3), designed to measure the distance of a ferromagnetic metal core inside a ribbon, said first meters (2, 3) being integral with one another and being set on one side of a first space (10) for receiving a ribbon, and operating in two coaxial spatial regions, whereby their measurements refer to one and the same first measuring axis (8);
   - a first reference surface (4), made of an electrically non-conductive and non-ferromagnetic material, set on the opposite side of said first space (10), designed to be in contact with a face of a ribbon, the distance of said first meters (2, 3) with respect to said first reference surface (4) being adjustable along said first measuring axis (8);
   - a second distance meter (5), designed to measure the distance of a face of a ribbon, and a second inductive distance meter (6), designed to measure the distance of a ferromagnetic metal core inside a ribbon, said second distance meters (5, 6) being integral with one another and operating in two coaxial spatial regions, whereby their measurements refer to one and the same second measuring axis (9); and
   - a second reference surface (7), constituted by an electrically non-conductive and non-ferromagnetic material, set on the opposite side of said second space and designed to be in contact with a face of a ribbon, the distance of said second meters (5, 6) with respect to said second reference surface (7) being adjustable along said second measuring axis (9);

   said first space (10) and second space (11) being in communication with one another to form an overall space, so as to enable passage of a ribbon from the first space to the second space, said first meters (2, 3) and said second reference surface (7) defining one side of the overall space (10, 11) for passage of a ribbon, and said first reference surface (4) and said second meters (5, 6) defining the opposite side of said overall space (10, 11) for passage of the ribbon.

2. The device according to Claim 1, further comprising:

   - means (12) designed to detect the relative position of said first meters (2, 3) with respect to a first reference ($Z_1$); and
   - means (13) designed to detect the relative position of said second meters (5, 6) with respect to a second

reference $(Z_2)$-

3. The device according to Claim 1 or Claim 2, in which said first distance meter (2) and said second distance meter (5), designed to measure the distance of the opposite faces of the ribbon, are pneumatic, optical or ultrasound distance meters.

4. A process of calibrating the inductive meters of a device for measuring the unbalancing of a ferromagnetic metal core set inside a ribbon of electrically non-conductive and non-ferromagnetic material, the device comprising:

  - a first distance meter (2), designed to measure the distance of a face of a ribbon, and a first inductive distance meter (3), designed to measure the distance of a ferromagnetic metal core inside a ribbon, said first meters (2, 3) being integral with one another and being set on one side of a first space (10) for receiving a ribbon, and operating in two coaxial spatial regions, whereby their measurements refer to one and the same first measuring axis (8);
  - a first reference surface (4), made of an electrically non-conductive and non-ferromagnetic material, set on the opposite side of said first space (10), designed to be in contact with a face of a ribbon, the distance of said first meters (2, 3) with respect to said first reference surface (4) being adjustable along said first measuring axis (8);
  - a second distance meter (5), designed to measure the distance of a face of a ribbon, and a second inductive distance meter (6), designed to measure the distance of a ferromagnetic metal core inside a ribbon, said second distance meters (5, 6) being integral with one another and operating in two coaxial spatial regions, whereby their measurements refer to one and the same second measuring axis (9); and
  - a second reference surface (7), constituted by an electrically non-conductive and non-ferromagnetic material, set on the opposite side of said second space and designed to be in contact with a face of a ribbon, the distance of said second meters (5, 6) with respect to said second reference surface (7) being adjustable along said second measuring axis (9);

  said first space (10) and second space (11) being in communication with one another to form an overall space, so as to enable passage of a ribbon from the first space to the second space, said first meters (2, 3) and said second reference surface (7) defining one side of the overall space (10, 11) for passage of a ribbon, and said first reference surface (4) and said second meters (5, 6) defining the opposite side of said overall space (10, 11) for passage of the ribbon;
  the process comprising the steps of:

  - using a ferrite specimen and a spacer of known thickness for calibrating each inductive meter (3, 6), at a single work point $(V_{1,0;}\ V_{2,0})$;
  - for each inductive meter (3, 6) performing a series of displacements along the measuring axis (8, 9) using the same ferrite specimen to obtain a series of pairs of voltages $(V_{11}, V_{21}; ... V_{1n}, V_{2n})$ for which the inductive meters (3, 6) are at the same distances from a ferrite target;
  - creating, by interpolation, a calibration curve for the first inductive meter (3) and for the second inductive meter (6); and
  - calculating the sensitivity $(S_1, S_2)$ of each inductive meter (3, 6) in the neighbourhood of a work point $(V_{1i}, V_{2i})$ to which there correspond equal distances from the target measured.

5. The process according to Claim 4, in which the sensitivity of each inductive meter (3,6) is defined as the tangent to the calibration curve in the nominal work point.

6. The process according to Claim 4, in which the sensitivity of each inductive meter is obtained by making a series of measurements, at different distances, directly on the material to be measured.

7. A method of measuring the unbalancing of a ferromagnetic metal core set inside a ribbon of electrically non-conductive and non-ferromagnetic material, the method comprising the steps of:

  - measuring the distance $P_1$ of a face of the ribbon, on a first side of a space (10, 11) designed to enable insertion of the ribbon, along a first measuring axis (8), with respect to a first reference $(Z_1)$;
  - measuring the distance $P_2$ of the opposite face of the ribbon, on a second side of a space (10, 11) designed to enable insertion of the ribbon, along a second measuring axis (9), with respect to a second reference $(Z_2)$;
  - measuring the voltage $V_1$, at output from a first inductive meter (3), which refers to the first measuring axis (8);

- measuring the voltage $V_2$ at output from a second inductive meter, which refers to the second measuring axis (9);
- selecting the pair of voltages $V_{1,i}$ and $V_{2,i}$ for which the inductive meters are equidistant from the metal core and which presents values closest to the voltages measured;
- from the local sensitivity $S_1$ of the first inductive meter (3) and the local sensitivity $S_2$ of the second inductive meter (6) calculating the deviations $M_1$ and $M_2$ between the distance ($d_i$), corresponding to the voltages $V_{1,i}$ and $V_{2,i}$ and the distances measured, corresponding to the voltages $V_1$ and $V_2$ as follows : $M_1 = S_1 \cdot (V_1 - V_{1i})$, and $M_2 = S_2 . (V_2 - V_{2i})$; and
- calculating the difference $M_1 - M_2 + P_2 - P_1$

## Patentansprüche

1. Eine Vorrichtung zur Messung der Unwucht eines ferromagnetischen Metallkerns, der in ein Band aus elektrisch nicht leitendem und nicht ferromagnetischem Material eingesetzt ist, wobei die Vorrichtung folgendes umfasst:

   - einen ersten Abstandsmesser (2), der ausgebildet ist, um die Distanz einer Fläche eines Bandes zu messen, und einen ersten induktiven Abstandsmesser (3), der ausgebildet ist, um die Distanz eines ferromagnetischen Metallkerns im Inneren eines Bandes zu messen, wobei die ersten Messer (2, 3) miteinander integral und auf einer Seite eines ersten Raums (10) zur Aufnahme eines Bandes angebracht sind und in zwei koaxialen räumlichen Bereichen arbeiten, wodurch ihre Messungen sich auf ein und dieselbe erste Meßachse (8) beziehen;
   - eine erste Referenzoberfläche (4), hergestellt aus einem elektrisch nicht leitenden und nicht ferromagnetischen Material, angebracht an der gegenüberliegenden Seite des ersten Raums (10), die ausgebildet ist, um in Kontakt mit einer Fläche eines Bandes zu stehen, wobei der Abstand der ersten Messer (2, 3) zur ersten Referenzoberfläche (4) entlang der ersten Meßachse (8) einstellbar ist;
   - einen zweiten Abstandsmesser (5), der ausgebildet ist, um die Distanz einer Fläche eines Bandes zu messen, und einen zweiten induktiven Abstandsmesser (6), der ausgebildet ist, um die Distanz eines ferromagnetischen Metallkerns im Inneren eines Bandes zu messen, wobei die zweiten Abstandsmesser (5, 6) miteinander integral sind und in zwei koaxialen räumlichen Bereichen arbeiten, wodurch ihre Messungen sich auf ein und dieselbe zweite Meßachse (9) beziehen; und
   - eine zweite Referenzoberfläche (7), bestehend aus einem elektrisch nicht leitenden und nicht ferromagnetischen Material, angebracht auf der gegenüberliegenden Seite des zweiten Raums und die ausgebildet ist, um in Kontakt mit einer Fläche eines Bandes zu stehen, wobei der Abstand der zweiten Messer (5, 6) zur zweiten Referenzoberfläche (7) entlang der zweiten Meßachse (9) einstellbar ist;

   wobei der erste Raum (10) und der zweite Raum (11) miteinander verbunden sind, um einen Gesamtraum zu bilden, um das Hindurchgehen eines Bandes vom ersten Raum zum zweiten Raum zu ermöglichen, wobei die ersten Messer (2, 3) und die zweite Referenzoberfläche (7) eine Seite des Gesamtraums (10, 11) für das Hindurchgehen eines Bandes bestimmen und die erste Referenzoberfläche (4) und die zweiten Messer (5, 6) die gegenüberliegende Seite des Gesamtraums (10, 11) für das Hindurchgehen des Bandes bestimmen.

2. Die Vorrichtung gemäß Anspruch 1, die weiter folgendes umfasst:

   - Mittel (12) zur Erfassung der relativen Position der ersten Messer (2, 3) zu einer ersten Referenz ($Z_1$) und
   - Mittel (13) zur Erfassung der relativen Position der zweiten Messer (5, 6) zu einer zweiten Referenz ($Z_2$).

3. Die Vorrichtung gemäß Anspruch 1 oder Anspruch 2, in welcher der erste Abstandsmesser (2) und der zweite Abstandsmesser (5), die ausgebildet sind, um die Distanz der gegenüberliegenden Flächen des Bandes zu messen, pneumatische, optische oder Ultraschall-Abstandsmesser sind.

4. Ein Verfahren des Kalibrierens der induktiven Meßgeräte einer Vorrichtung zur Messung der Unwucht eines ferromagnetischen Metallkerns, der im Inneren eines Bandes aus elektrisch nicht leitendem und nicht ferromagnetischem Material angebracht ist, wobei die Vorrichtung folgendes umfasst:

   - einen ersten Abstandsmesser (2), der ausgebildet ist, um die Distanz einer Fläche eines Bandes zu messen, und einen ersten induktiven Abstandsmesser (3), der ausgebildet ist, um die Distanz eines ferromagnetischen Metallkerns im Inneren eines Bandes zu messen, wobei die ersten Messer (2, 3) miteinander integral und auf einer Seite eines ersten Raums (10) zur Aufnahme eines Bandes angebracht sind und in zwei koaxialen räumlichen Bereichen arbeiten, wodurch ihre Messungen sich auf ein und dieselbe erste Meßachse (8) beziehen;

- eine erste Referenzoberfläche (4), hergestellt aus einem elektrisch nicht leitenden und nicht ferromagnetischen Material, angebracht an der gegenüberliegenden Seite des ersten Raums (10), die ausgebildet ist, um in Kontakt mit einer Fläche eines Bandes zu stehen, wobei der Abstand der ersten Messer (2, 3) zur ersten Referenzoberfläche (4) entlang der ersten Meßachse (8) einstellbar ist;

- einen zweiten Abstandsmesser (5), der ausgebildet ist, um die Distanz einer Fläche eines Bandes zu messen, und einen zweiten induktiven Abstandsmesser (6), der ausgebildet ist, um die Distanz eines ferromagnetischen Metallkerns im Inneren eines Bandes zu messen, wobei die zweiten Abstandsmesser (5, 6) miteinander integral sind und in zwei koaxialen räumlichen Bereichen arbeiten, wodurch ihre Messungen sich auf ein und dieselbe zweite Meßachse (9) beziehen; und

- eine zweite Referenzoberfläche (7), bestehend aus einem elektrisch nicht leitenden und nicht ferromagnetischen Material, angebracht auf der gegenüberliegenden Seite des zweiten Raums und die ausgebildet ist, um in Kontakt mit einer Fläche eines Bandes zu stehen, wobei der Abstand der zweiten Messer (5, 6) zur zweiten Referenzoberfläche (7) entlang der zweiten Meßachse (9) einstellbar ist;

wobei der erste Raum (10) und der zweite Raum (11) miteinander verbunden sind, um einen Gesamtraum zu bilden, um das Hindurchgehen eines Bandes vom ersten Raum zum zweiten Raum zu ermöglichen, wobei die ersten Messer (2, 3) und die zweite Referenzoberfläche (7) eine Seite des Gesamtraums (10, 11) für das Hindurchgehen eines Bandes bestimmen und die erste Referenzoberfläche (4) und die zweiten Messer (5, 6) die gegenüberliegende Seite des Gesamtraums (10, 11) für das Hindurchgehen des Bandes bestimmen;

wobei das Verfahren folgende Schritte umfasst:

- Verwendung einer Ferritprobe und eines Abstandshalters mit bekannter Dicke zur Kalibrierung jedes induktiven Meßgeräts (3, 6) an einem einzigen Arbeitspunkt ($V_{1,0}$; $V_{2,0}$);
- für jedes induktive Meßgerät (3, 6), Durchführen einer Reihe von Verschiebungen entlang der Meßachse (8, 9) unter Verwendung derselben Ferritprobe, um eine Reihe von Spannungspaaren ($V_{11}$, $V_{21}$; ... $V_{1n}$, $V_{2n}$), zu erhalten, bei welchen die induktiven Meßgeräte (3, 6) denselben Abstand von einem Ferritziel haben;
- Erstellung, durch Interpolation, einer Kalibrierungskurve für das erste induktive Meßgerät (3) und für das zweite induktive Meßgerät (6); und
- Berechnung der Empfindlichkeit ($S_1$, $S_2$) jedes induktiven Meßgeräts (3, 6) in der Umgebung eines Arbeitspunkts ($V_{1i}$, $V_{2i}$), dem gleiche Abstände vom gemessenen Ziel entsprechen.

5. Das Verfahren gemäß Anspruch 4, in dem die Empfindlichkeit jedes induktiven Meßgeräts (3, 6) definiert ist als die Tangente zur Kalibrierungskurve im nominalen Arbeitspunkt.

6. Das Verfahren gemäß Anspruch 4, in dem die Empfindlichkeit jedes induktiven Meßgeräts gewonnen wird durch Durchführung einer Reihe von Messungen in verschiedenen Abständen direkt an dem zu messendem Material.

7. Ein Verfahren des Messens der Unwucht eines ferromagnetischen Metallkerns, angebracht im Inneren eines Bandes aus elektrisch nicht leitendem und nicht ferromagnetischem Material, wobei das Verfahren folgende Schritte umfasst:

- Messen des Abstands $P_1$ einer Fläche des Bandes an einer ersten Seite eines Raums (10, 11), der ausgebildet ist, um das Einführen des Bandes zu ermöglichen, entlang einer ersten Meßachse (8), zu einer ersten Referenz ($Z_1$);
- Messen des Abstands $P_2$ der gegenüberliegenden Fläche des Bandes an einer zweiten Seite eines Raums (10, 11), der ausgebildet ist, um das Einführen des Bandes zu ermöglichen, entlang einer zweiten Meßachse (9), zu einer zweiten Referenz ($Z_2$) ;
- Messen der Spannung $V_1$ am Ausgang von einem ersten induktiven Meßgerät (3), das sich auf die erste Meßachse (8) bezieht;
- Messen der Spannung $V_2$ am Ausgang von einem zweiten induktiven Meßgerät, das sich auf die zweite Meßachse (9) bezieht;
- Auswahl des Spannungspaares $V_{1,i}$ und $V_{2,i}$, bei dem die induktiven Meßgeräte gleich weit vom Metallkern entfernt sind, und das Werte liefert, die den gemessenen Spannungen am nächsten sind;
- aus der lokalen Empfindlichkeit $S_1$ des ersten induktiven Meßgeräts (3) und der lokalen Empfindlichkeit $S_2$ des zweiten induktiven Meßgeräts (6), Berechnung der Abweichungen $M_1$ und $M_2$ zwischen dem Abstand ($d_i$), entsprechend den Spannungen $V_{1,i}$ und $V_{2,i}$, und den gemessenen Abständen, entsprechend den Spannungen $V_1$ und $V_2$, wie folgt: $M_1 = S_1 (V_1 - V_{1i})$ und $M_2 = S_2 (V_2 - V_{2i})$; und
- Berechnung der Differenz $M_1 - M_2 + P_2 - P_1$.

**Revendications**

1. Dispositif pour mesurer le déséquilibre d'un jeu de noyaux ou âmes ferromagnétiques et métalliques dans un ruban de matériau électriquement non conducteur et non ferromagnétique, le dispositif comprenant :

   - un premier moyen de mesure de distance (2), conçu pour mesurer la distance d'une face d'un ruban et un premier moyen de mesure par induction de distance (3) conçu pour mesurer la distance d'un noyau métallique ferromagnétique à l'intérieur d'un ruban, lesdits moyens de mesure (2, 3) étant intégrés ensemble et formant un tout placé d'un côté d'un premier espace (10) pour la réception d'un ruban et l'actionnement dans deux régions coaxiales dans l'espace, ce en quoi leurs mesures se réfèrent au premier et même axe de mesure (8) ;
   - une première surface (4) faite d'un matériau électriquement non conducteur et non ferromagnétique placé de l'autre côté dudit premier espace (10) conçu pour être en contact avec une face d'un ruban, la distance desdits moyens de mesure (2,3) par rapport à ladite première surface de référence (4) étant réglable le long dudit axe de mesure (8) ;
   - un deuxième moyen de mesure de distance (5) conçu pour mesurer la distance d'une face d'un ruban et un deuxième moyen de mesure par induction de distance (6) conçu pour mesurer la distance d'un noyau métallique ferromagnétique à l'intérieur d'un ruban, lesdits deuxièmes moyens de mesure de distance (5, 6) étant intégrés ensemble et fonctionnant dans deux régions coaxiales dans l'espace, ce en quoi leurs mesures se réfèrent à l'un et même deuxième axe de mesure (9) ;
   - une deuxième surface (7) constituée par un matériau électriquement non conducteur et non ferromagnétique, placé de l'autre côté dudit deuxième espace et conçu pour être en contact avec une face d'un ruban, la distance desdits deuxièmes moyens de mesure (5, 6) par rapport à ladite deuxième surface de référence (7) étant réglable le long du deuxième axe de mesure (9) ; lesdits premier espace (10) et deuxième espace (11) communiquant entre eux pour former un espace complet afin de permettre le passage d'un ruban du premier espace au deuxième espace, lesdits premiers moyens de mesure (2, 3) et ladite deuxième surface de référence (7) définissant un côté de l'espace complet (10, 11) pour le passage d'un ruban, ladite première surface de référence (4) et lesdits deuxièmes moyens de mesure (5, 6) définissant le côté opposé dudit espace complet (10, 11) pour le passage du ruban.

2. Dispositif selon la revendication 1, comprenant en outre :

   - des moyens (12) conçus pour détecter la position relative desdits moyens de mesure (2, 3) par rapport à une première référence ($Z_1$) ; et
   - des moyens (13) conçus pour détecter la position relative desdits deuxièmes moyens de mesure (5, 6) par rapport à une deuxième référence ($Z_2$).

3. Dispositif selon la revendication 1, dans lequel ledit premier moyen de mesure de distance (2) et ledit deuxième moyen de mesure de distance (5) conçus pour mesurer la distance des faces opposées du ruban sont pneumatiques, optiques ou des moyens de mesure à ultrasons.

4. Procédé de calibrage des moyens de mesure par induction d'un dispositif pour mesurer le déséquilibre d'un jeu de noyaux métalliques ferromagnétiques à l'intérieur d'un ruban de matériau électriquement non conducteur et non ferromagnétique, le dispositif comprenant :

   - un premier moyen de mesure de distance (2) conçu pour mesurer la distance d'une face d'un ruban et un premier moyen de mesure par induction de distance (3) conçu pour mesurer la distance d'un noyau métallique ferromagnétique à l'intérieur d'un ruban, lesdits premiers moyens de mesure (2, 3) étant intégrés ensemble et placés sur le côté d'un premier espace (10) pour la réception d'un ruban et le fonctionnement coaxial dans l'espace, ce en quoi leurs mesures se réfèrent à un et même premier axe de mesure (8) ;
   - une première surface de référence (4) fait en matériau électriquement non conducteur et non ferromagnétique placée sur le côté opposé dudit premier espace (10) et conçue pour être en contact avec une face d'un ruban, la distance desdits premiers moyens de mesure (2, 3) par rapport à ladite première distance de référence (4) étant réglable le long dudit premier axe de mesure (8) ;
   - un deuxième moyen de mesure de distance (5) conçu pour mesurer la distance d'une face d'un ruban et un deuxième moyen de mesure par induction de distance (6) conçu pour mesurer la distance d'un noyau métallique ferromagnétique à l'intérieur d'un ruban, lesdits deuxièmes moyens de mesure de distance (5, 6) étant intégrés ensemble et fonctionnant dans deux régions coaxiales dans l'espace, ce en quoi leurs mesures se réfèrent à un et au même deuxième axe de mesure (9) ;

- une deuxième surface de référence (7) constituée en un matériau électriquement non conducteur et non ferromagnétique placé de l'autre côté par rapport audit deuxième espace et conçue pour être en contact avec un face d'un ruban, la distance desdits deuxièmes moyens de mesure (5, 6) par rapport à ladite deuxième surface de référence (7) étant réglable le long du deuxième axe de mesure (9) ;
- lesdits premier espace (10) et deuxième espace (11) étant en communication entre eux pour former un espace complet afin de permettre le passage d'un ruban du premier espace au deuxième espace, lesdits premiers moyens de mesure (2, 3) et la deuxième surface de référence (7) définissant un côté de l'espace complet (10, 11) pour le passage d'un ruban et ladite surface de référence (4) et lesdits deuxièmes moyens de mesure (5, 6) définissant le côté opposé dudit espace complet (10, 11) pour le passage du ruban ;

le procédé comprenant les étapes de :

- utilisation d'un spécimen de ferrite et une entretoise d'épaisseur connue pour le calibrage de chaque moyen de mesure par induction (3, 6), réalisant un série de déplacement le long des axes de mesure (8, 9) utilisant le même spécimen de ferrite pour obtenir une série de paires de mesure de tension ($V_{11}$, $V_{21}$, ...$V_{1n}$, $V_{2n}$) pour lequel les moyens de mesure par induction (3, 6) sont à la même distance d'une cible en ferrite ;
- création par interpolation d'une courbe de calibrage pour le premier moyen de mesure par induction (3) et pour le deuxième moyen de mesure par indcution (6) ; et
- en calculant la sensibilité ($S_1$, $S_2$) de chaque moyen de mesure par induction (3, 6) dans le voisinage d'un point de travail ($V_{1i}$, $V_{2i}$) correspondant à des distances égales par rapport à la référence mesurée.

5. Procédé selon la revendication 4, dans lequel la sensibilité de chaque moyen de mesure par induction (3, 6) est définie comme la tangente à la courbe de calibrage au point de travail nominal.

6. Procédé selon la revendication 4 , dans lequel la sensibilité de chaque moyen de mesure par induction est obtenue en faisant une série de mesures à différentes distances directement sur le matériau destiné à être mesuré.

7. Procédé de mesure de déséquilibre ou balourd d'un jeu de noyaux métalliques ferromagnétiques installé à l'intérieur d'un ruban de matériau électriquement non conducteur et non ferromagnétique, le procédé comprenant les étapes de :

- mesure de distance $P_1$ d'une face du ruban, sur un premier côté d'un espace (10, 11) conçu pour permettre l'insertion du ruban, le long d'un premier axe de mesure (8) par rapport à une première référence ($Z_1$) ;
- mesure de distance $P_2$ de la face opposée du ruban sur un deuxième côté d'un espace (10, 11) conçu pour permettre l'insertion du ruban le long d'un deuxième axe de mesure (9) par rapport à une deuxième référence ($Z_2$) ;
- mesure de la tension V1 à la sortie d'un premier moyen de mesure inductive (3) qui se réfère au premier axe de mesure (8) ;
- choix d'une paire de tensions $V_{1,i}$ et $V_{2,i}$ par lesquels les moyens de mesure inductive sont équidistants par rapport aux noyaux métalliques et lesquels présentent des valeurs proches des tensions mesurées ;
- depuis la sensibilité locale $S_1$ du premier moyen de mesure inductive (3) et la sensibilité locale $S_2$ du deuxième moyen de mesure inductive (6) calculant les déviations $M_1$ et $M_2$ entre les distances ($d_i$) correspondant aux tensions $V_{1,i}$ et $V_{2,i}$ et les distances mesurées correspondant aux tensions $V_1$, $V_2$ comme suit $M_1 = S_1(V_1 - V_{1,i})$ et $M_2 = S_2(V_2 - V_{2,i})$; et
- calcul de la différence $M_1 - M_2 + P_1 - P_2$

**Figure 1**

**Figure 2**

**Figure 3**

**Figure 4**

**Figure 5**